# EUROPÄISCHE PATENTSCHRIFT

(11) **EP 0 332 876 B1**
(45) Veröffentlichungstag und Bekanntmachung des Hinweises auf die Patenterteilung: **15.09.1993**
(21) Anmeldenummer: 89102750.0
(22) Anmeldetag: 17.02.1989
(51) Int. Cl.: B62B 5/04, B62B 3/00

(54) **Wagen**
Cart
Chariot

(30) Priorität: 15.03.1988 CH 989/88
(43) Veröffentlichungstag der Anmeldung: 20.09.1989
(73) Patentinhaber: ROMAY AG, CH-5727 Oberkulm (CH)
(72) Erfinder: Huber, Thomas, CH-5727 Oberkulm (CH)
(74) Vertreter: Fillinger, Peter, Dr.

(56) Entgegenhaltungen:
- EP-A- 0 072 491
- DE-A- 3 431 073
- FR-A- 2 297 161
- GB-A- 1 377 155

## Beschreibung

Die vorliegende Erfindung bezieht sich auf einen Wagen gemäss dem Oberbegriff des Anspruchs 1.

Ein Wagen dieser Art ist aus der EP-A1-72 491 bekannt. Bei dieser Vorrichtung wird die an einem Fusspedal erzeugte Bremskraft über den stabartigen Träger auf den Bremskörper übertragen und dieser formschlüssig in der Bremsstellung gehalten.

Die vorliegende Erfindung stellt sich die Aufgabe, eine im Aufbau einfache und insbesondere für eine Allradbremsung geeignete Bremse zu schaffen.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert. Es zeigen:

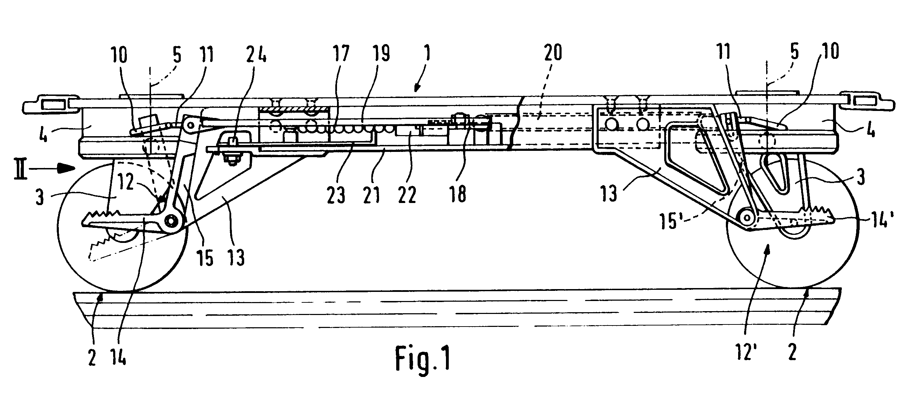

- Fig. 1: eine Seitenansicht eines Wagenchassis mit Fahrwerk und Bremse,

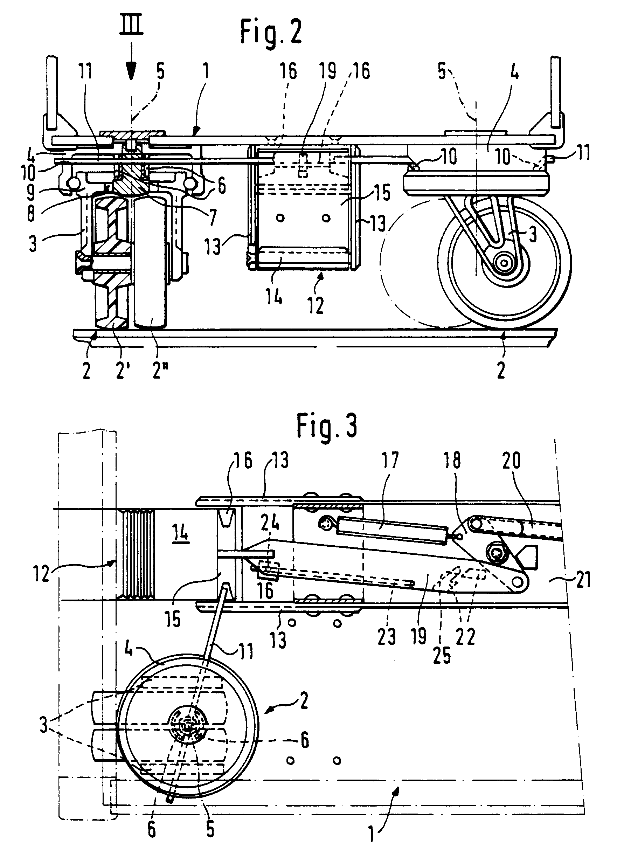

- Fig. 2: eine Ansicht des Wagenchassis in Richtung des Pfeiles II in Fig. 1,
- Fig. 3: eine Draufsicht auf das Wagenchassis in Richtung des Pfeiles III in Fig. 2, wobei lediglich eine Ecke mit einem Rad gezeigt ist,
- Fig. 4: eine perspektivische Ansicht eines Rades mit der Bremse, wobei Teile weggebrochen sind.

Die Zeichnung zeigt das Chassis 1 eines Servicewagens für Passagierflugzeuge, aus dem den Passagieren Verpflegung und Getränke verabreicht werden. Der im Grundriss rechteckige Servicewagen weist nahe seiner vier Ecken je ein Rad 2 bestehend aus Doppelrollen 2' und 2'' auf. Die Räder 2 sind Schwenkräder und je in einer Gabel 3 gelagert, die ihrerseits in einer mit dem Chassis 1 fest verbundenen Lagerbuchse 4 um eine vertikale Achse 5 drehbar kugelgelagert ist. Die Räder 2 stellen sich somit selbsttätig in Fahrrichtung ein. Jede Lagerbuchse 4 weist zwei im Querschnitt ringsegmentförmige, zur Schwenkachse 5 konzentrische und voneinander distanzierte Führungssegmente 6 auf, zwischen denen ein zylindrischer Bremskörper 7 achsial verschiebbar und verdrehbar gelagert ist. Der Bremskörper 7 ragt durch eine Durchbrechung 8 im Gabelquersteg 9 hindurch und ist zwischen den Führungssegmenten 6 aus einer Ruhestellung geradlinig (längs einer Verschiebeachse) gegen das Rad in eine Bremsstellung und zurück verschiebbar.

Zu gegenüberliegenden Seiten des Bremskörpers 7 ist die Lagerbuchse 4 mit zwei schlitzförmigen Durchbrechungen 10 versehen, welche - mit Bezug auf eine die Verschiebeachse (welche mit der Schwenkachse 5 zusammenfällt) des Bremskörpers 7 rechtwinklig schneidende Ebene - schiefe Führungen bilden. Die schiefen Führungen 10 sind mit Bezug auf die Verschiebeachse 5 des Bremskörpers 7 achssymmetrisch um 180° versetzt. Durch diese schiefen Führungen 10 und durch den Bremskörper 7 hindurch ist ein Trägerstab 11 gesteckt. Dieser weist seitlich einen hinreichenden Abstand zu den Führungssegmenten 6 auf, so dass er in den schrägen Führungen 10 mit dem Bremskörper um dessen Verschiebeachse 5 herum verschwenkt werden kann. Wird der Trägerstab 11 vom oberen Ende der schrägen Führungen 10 zum unteren und zurück verschwenkt, vollzieht der Bremskörper 7 diese Schwenkbewegung mit und verschiebt sich gleichzeitig zwischen den Führungssegmenten 6 aus seiner Ruhestellung gegen das Rad 2 in die Bremsstellung (in der er auf die Radperipherie drückt) und zurück.

Schmalseitig am Chassis 1 ist zwischen zwei Rädern 2 ein Winkelhebel 12 zwischen zwei Lagerbacken 13 gelagert, derart, dass einer seiner Schenkel ein Pedal 14 für das Betätigen der Bremse bildet. Die Lagerbacken 13 sind fest am Chassis 1. Der andere Schenkel 15 des Winkelhebels 12 ist am oberen Ende mit aussenseitigen, im Querschnitt V-förmigen Lagernuten 16 versehen, in welche je das Ende eines Trägerstabes 11 hineingreift. Wird das Pedal 14 auf und ab verschwenkt, nimmt der Winkelhebel 12 die in seine Lagernuten 16 eingreifenden Trägerstäbe 11 mit. Diese verschieben sich dabei in den Führungen 10 und bewegen die daran befestigten Bremskörper 7 zwischen ihrer Bremsstellung und ihrer Ruhestellung.

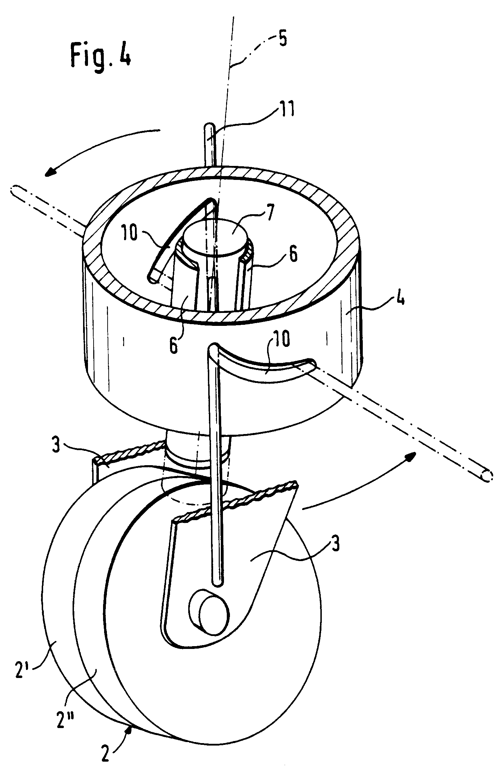

Wie insbesondere aus Fig. 3 erkennbar ist, dient eine Rückstellfeder 17 dazu, das Pedal 14 in seiner oberen Lage und damit den bzw. die Bremskörper 7 in der Ruhestellung zu halten. Die auf Zug vorgespannte Rückstellfeder 17 greift am einen Arm eines zweiarmigen Hebels 18 an, an dessen anderen Arm ein Zugstab 19 angelenkt ist, der mit seinem anderen Ende am Schenkel 15 des Winkelhebels 12 angreift. Das andere Ende der Rückstellfeder 17 ist an einer mit dem Chassis 1 fest verbundenen Trägerplatte 21 verankert, an der auch der zweiarmige Hebel 18 gelagert ist.

An der anderen Schmalseite des Chassis 1 ist zwischen den Rädern 2 (symmetrisch zum ersten Winkelhebel 12) ein zweiter Winkelhebel 12′ zwischen gleichen Lagerbacken 13 angeordnet, der mit einem Schenkel ebenfalls ein Pedal 14′ bildet. An seinem anderen Schenkel 15′ ist die Schubstange 20 angelenkt, wodurch die Winkelhebel 12, 12′ synchron und symmetrisch bewegbar sind. Der Winkelhebel 12′ steht mit den Bremsen der ihm benachbarten beiden Räder 2 in gleicher Wirkverbindung wie der Winkelhebel 15 mit den Bremsen der ihm benachbarten Räder 2. Wird wahlweise auf eines der beiden Pedale 14, 14′ getreten, werden bei allen vier Rädern 2 die Bremskörper 7 aus der Ruhestellung in die Bremsstellung bzw. zurück bewegt.

Damit beim Niedertreten eines der beiden Pedale 14, 14′ die Bremskörper 2 in der Bremsstellung verharren, ist an der Zugstabunterseite eine Führungskurve 22 befestigt. Diese wirkt mit dem abgekröpften Ende eines Hebels 23 zusammen, der um eine Achse 24 schwenkbar an der Trägerplatte 21 gelagert und mit einer Torsionsfeder mit der in Fig. 3 gezeigten Grundstellung gehalten wird. Wird eines der beiden Pedale 14, 14′ gedrückt und anschliessend frei gegeben, trifft der Hebel 23 auf die Umfangsfläche der Führungskurve 22 und folgt dieser, bis er in eine Hinterschneidung 25 zu liegen kommt. Das Pedal 14 kann nicht in seine Ausgangsstellung zurückkehren und die Räder 2 bleiben gebremst. Erst auf einen zweiten Pedaldruck folgt der Hebel 23 weiter der Umfangsfläche der Führungskurve 22 und gibt den Zugstab 19 frei für die Rückkehr in seine Ausgangslage. Mit der Freigabe des Zugstabs 19 kann sich die Rückstellfeder 17 entspannen und die Bremsen lösen.

Nach nicht dargestellten Ausführungsbeispielen können nur drei, zwei oder eines der Räder 2 gebremst sein, wobei gewünschtenfalls der ganze Winkelhebel 12′ oder nur sein das Pedal 14′ bildender Schenkel entfallen kann.

## Patentansprüche

1. Wagen an dem wenigstens ein Rad (2) mit einer Bremse versehen ist, welche einen am Wagenchassis (1) gelagerten und gegen das Rad bewegbaren Bremskörper (7) aufweist, wobei die Bremse einen längs einer geraden Bewegungsachse gegen das Rad bzw. von diesem weg bewegbar gelagerten Bremskörper (7) aufweist, der mit einem zur Bewegungsachse (5) rechtwinklig orientierten, stabartigen Träger (11) verbunden ist, dadurch gekennzeichnet, dass der Träger (11) in zwei mit Bezug auf eine die Bewegungsachse rechtwinklig schneidenden Ebene schiefen Führungen (10) verschiebbar und um die Bewegungsachse (5) verschwenkbar angeordnet ist, und dass die schiefen Führungen (10) zu gegenüberliegenden Seiten des Bremskörpers (7) und achssymmetrisch mit Bezug auf die Bewegungsachse (5) angeordnet sind.

2. Wagen nach Anspruch 1, dadurch gekennzeichnet, dass die Bewegungsachse (5) quer zur Radachse orientiert ist und die Radperipherie schneidet.

3. Wagen nach Anspruch 1 oder 2, dadurch gekennzeichnet, dass zur Betätigung der Bremse zwischen dem gebremsten Rad (2) und einem benachbarten zweiten Rad (2) ein Winkelhebel (12) am Wagenchassis (1) angelenkt ist, dass einer seiner Schenkel ein Tretpedal (14) bildet und vom Wagen wegragt, und dass der andere Schenkel (15) über ein Auslgeichsgelenk (16) mit einem Ende des stabartigen Trägers (11) verbunden ist.

4. Wagen nach Anspruch 1 oder 3, dadurch gekennzeichnet, dass eine Rückstellfeder (17) den Bremskörper (7) in seiner Ruhestellung hält.

5. Wagen nach Anspruch 4, dadurch gekennzeichnet, dass eine Rastmechanik (22 bis 25) vorhanden ist, welche bei einem ersten Druck auf das Tretpedal (14) einrastet und den Bremskörper (7) gegen die Wirkung der Rückstellfeder (17) in der Bremsstellung festhält und bei einem zweiten Druck ausrastet, so dass die Rückstellfeder (17) den Bremskörper (7) und das Tretpedal (14) in die Ruhestellung bewegt.

6. Wagen nach einem der Ansprüche 1 bis 5, dadurch gekennzeichnet, dass das zweite Rad (2) symmetrisch mit Bezug auf den Winkelhebel (12) mit einer gleichen Bremse wie das erste Rad (2) ausgerüstet und mittels des Winkelhebels (12) betätigbar ist.

7. Wagen nach einem der Ansprüche 1 bis 6, mit vier an den Ecken eines Rechteckes angeordneten Rädern (2), dadurch gekennzeichnet, dass zwischen dem dritten und dem vierten Rad zur Betätigung der Bremse(n) ein zweiter Winkelhebel (14′) vorgesehen und vorzugsweise durch Schubstangen (19, 20) und einen zweiarmigen Waagehebel (18) mit dem ersten Winkelhebel (14) in Wirkverbindung ist, derart, dass sich die beiden Winkelhebel (14, 14′) synchron und symmetrisch bewegen.

8. Wagen nach Anspruch 7, dadurch gekennzeichnet, dass das dritte und vierte Rad (2) symmetrisch mit Bezug auf den zweiten Winkelhebel (14′) mit einer gleichen Bremse wie das erste und zweite Rad (2) ausgerüstet sind, deren stabartige Träger (11) über Ausgleichsgelenke (16) mit dem zweiten Winkelhebel (14′) verbunden sind.

## Claims

1. A trolley on which at least one wheel (2) is provided with a brake, which comprises a brake body (7) mounted on the trolley chassis (1) and which can move against the wheel, wherein the brake has a brake body (7), which is mounted along a straight axis of movement so that it can move towards the wheel or away from the latter, and which is attached to a rod-like support (11) oriented at right angles to the axis of movement (5), characterised in that the support (11) is disposed so that it is displaceable and can pivot about the axis of movement (5) in two guides (10) which are inclined in relation to a plane intersecting the axis of movement at right angles, and that the inclined guides (10) are disposed on opposite sides of the brake body (7) and axially symmetric in relation to the axis of movement (5).

2. A trolley according to claim 1, characterised in that the axis of movement (5) is oriented transversely to the wheel axle and intersects the wheel periphery.

3. A trolley according to claim 1 or 2, characterised in that an angled lever (12) is articulated to the trolley chassis (1) between the braked wheel (2) and an adjacent second wheel (2) for operating the brake, that one of the limbs of the angled lever forms a foot pedal (14) and projects away from the trolley, and that the other limb (15) is attached to one end of the rod-like support (11) via an equalising link (16).

4. A trolley according to claim 1 or 3, characterised in that a pull-back spring (17) holds the brake body (7) in its off position.

5. A trolley according to claim 4, characterized in that a catch mechanism (22 to 25) is provided, which locks into place with the first press on the foot pedal (14) and holds the brake body (7) in the braking position against the action of the pull-back spring (17), and which disengages with the second press on the foot pedal, so that the pull-back spring (17) moves the brake body (7) and the foot pedal (14) into the off position.

6. A trolley according to any one of claims 1 to 5, characterised in that the second wheel (2) is fitted symmetrically in relation to the angled lever (12) with a brake the same as that of the first wheel (2), which brake can be operated by means of the angled lever (12).

7. A trolley according to any one of claims 1 to 6 with four wheels (2) arranged at the corners of a rectangle, characterised in that a second angled lever (14') is provided between the third and the fourth wheels for operating the brake(s), and is preferably actively connected to the first angled lever by means of connecting rods (19, 20) and a two-armed horizontal lever (18) in such a way that the two angled levers (14, 14') move synchronously and symmetrically.

8. A trolley according to claim 7, characterised in that the third and fourth wheels (2) are fitted symmetrically in relation to the second angled lever (14') with brakes the same as the first and second wheels (2), the rod-like supports (11) of which brakes are attached to the second angled lever (14') via equalising links (16).

## Revendications

1. Chariot sur lequel au moins une roue (2) est munie d'un frein qui présente un corps de frein (7) logé sur le châssis de chariot (1) et mobile sur la roue, le frein présente un corps de frein (7) logé le long d'un axe de déplacement linéaire contre la roue, ou il peut en être éloigné, il est relié à un support (11) en forme de barre, orienté à angle droit par rapport à l'axe de déplacement (5), caractérisé en ce que le support (11) peut se déplacer entre deux guidages (10) inclinés par rapport à un plan coupant à angle droit l'axe de déplacement et il est disposé en pivotement autour de l'axe de déplacement (5) et que les guidages inclinés (10) sont disposés de part et d'autre du corps de frein (7) et en symétrie axiale par rapport à l'axe de déplacement (5).

2. Chariot selon la revendication 1, caractérisé en ce que l'axe de déplacement (5) est orienté transversalement par rapport à l'axe de roue et coupe la périphérie de la roue.

3. Chariot selon la revendication 1 ou 2, caractérisé en ce que pour actionner le frein entre la roue freinée (2) et une deuxième roue voisine (2) se trouve une équerre (12) articulée sur le châssis de chariot (1), qu'une de ses branches forme une pédale (14) qui dépasse du chariot, et l'autre branche (15) est reliée par une articulation de compensation (16) à une extrémité du support en forme de barre (11).

4. Chariot selon la revendication 1 ou 3, caractérisé en ce qu'un ressort de rappel (17) maintient le corps de frein (7) dans sa position de repos.

5. Chariot selon la revendication 4, caractérisé en ce qu'il existe une mécanique d'encliquetage (22 à 25), qui s'encliquète lors d'une première pression sur la pédale (14) et qui maintient le corps de frein (7) contre l'effet du ressort de rappel (17) en position de freinage et lors d'une deuxième pression, elle se libère, de sorte que le ressort de rappel (17) déplace le corps de frein (7) et la pédale (14) en position repos.

6. Chariot selon l'une quelconque des revendications 1 à 5, caractérisé en ce que la deuxième roue (2) est équipée symétriquement par rapport à l'équerre (12) du même frein que la première roue (2) et qu'on peut l'actionner au moyen du levier en équerre (12).

7. Chariot selon l'une quelconque des revendications 1 à 6, avec quatre roues (2) disposées à chaque coin d'un carré, caractérisé en ce qu'entre la troisième et la quatrième roue, on prévoit un deuxième levier en équerre (14') pour actionner le(s) frein(s) et de préférence par l'intermédiaire de tiges de poussée (19-20) et qu'un levier équilibré (18) à deux bras est en liaison efficace avec le premier levier en équerre (14), de sorte que les deux leviers en équerre (14, 14') se déplacent en synchronisme et symétriquement.

8. Chariot selon la revendication 7, caractérisé en ce que la troisième et la quatrième roue (2) sont équipées symétriquement par rapport au deuxième levier en équerre (14') du même frein que la première et la deuxième roue (2), dont le support en forme de barre (11) est relié par une articulation de compensation (16) au deuxième levier en équerre (14').
